# EUROPEAN PATENT SPECIFICATION

(11) **EP 4 485 601 B1**
(45) Date of publication and mention of the grant of the patent: **09.09.2026**
(21) Application number: 23781423.1
(22) Date of filing: 31.03.2023
(51) Int. Cl.: H01M 10/0566, H01M 10/0567, H01M 10/052

(54) **NON-AQUEOUS ELECTROLYTE FOR LITHIUM SECONDARY BATTERY, AND LITHIUM SECONDARY BATTERY COMPRISING SAME**
WASSERFREIER ELEKTROLYT FÜR LITHIUMSEKUNDÄRBATTERIE UND LITHIUMSEKUNDÄRBATTERIE DAMIT
ÉLECTROLYTE NON AQUEUX POUR BATTERIE SECONDAIRE AU LITHIUM ET BATTERIE SECONDAIRE AU LITHIUM LE COMPRENANT

(30) Priority: 31.03.2022 KR 20220040774; 30.03.2023 KR 20230041707
(43) Date of publication of application: 01.01.2025
(73) Proprietor: LG Energy Solution, Ltd., Seoul 07335 (KR)
(72) Inventor: AHN, Kyoung Ho, Daejeon 34122 (KR); LEE, Won Tae, Daejeon 34122 (KR); JEONG, You Kyeong, Daejeon 34122 (KR); KIM, Min Jung, Daejeon 34122 (KR); SHIN, Won Kyung, Daejeon 34122 (KR); LEE, Chul Haeng, Daejeon 34122 (KR)
(74) Representative: Hoffmann Eitle
(86) International application number: PCT/KR2023/004333
(87) International publication number: WO 2023/191572

(56) References cited:
- EP-A1- 2 768 064
- WO-A1-2011/144697
- WO-A1-2023/043190
- CN-A- 114 230 584
- KR-A- 20150 092 271
- KR-A- 20160 100 964

## Description

### [TECHNICAL FIELD]

### Cross-reference to Related Applications

This application claims priority from Korean Patent Application Nos. 10-2022-0040774, filed on March 31, 2022, and 10-2023-0041707, filed on March 30, 2023.

### Technical field

The present disclosure relates to a non-aqueous electrolyte solution for lithium secondary battery comprising a phosphonium salt-based ionic liquid and a lithium secondary battery including the same.

### [BACKGROUND ART]

Dependence on electric energy is increasing in modern society, and accordingly the production of electric energy is further increasing. In order to solve environmental problems when producing electric energy, renewable energy generation is in the spotlight as a next-generation power generation system. In the case of such renewable energy, since it exhibits intermittent power generation characteristics, a large-capacity power storage device is essential in order to stably supply power. Lithium-ion batteries are in the spotlight as a power storage device with the highest energy density that has been commercialized among power storage devices.

The lithium-ion battery includes a positive electrode comprised of a transition metal oxide containing lithium, a negative electrode capable of storing lithium, a non-aqueous electrolyte solution serving as a medium that transfers lithium ions, and a separator.

In particular, the non-aqueous electrolyte solution is known as a component which greatly affects the stability, safety, and the like of the battery, and thus, research thereon has been actively conducted.

Generally, a liquid electrolyte solution in which an electrolyte salt is dissolved in an organic solvent is used as a non-aqueous electrolyte solution. However, this liquid electrolyte solution has the disadvantages of having high volatility of organic solvents under a high temperature atmosphere, generating a large amount of gas due to the side reactions with electrodes, and having low stability due to combustion caused by the temperature rise of the battery itself. Further, an increase in resistance between the electrode and the interface of the non-aqueous electrolyte solution under a low-temperature atmosphere results in the deterioration of overall performance.

Accordingly, there is a demand to develop a lithium secondary battery having flame retardancy and enhanced overall performance in high and low temperature environments.

### [DISCLOSURE OF THE INVENTION]

### [TECHNICAL PROBLEM]

In order to solve the above-described problems, the present disclosure aims to provide a non-aqueous electrolyte solution for a lithium secondary battery comprising a phosphonium salt-based ionic liquid.

Also, the present disclosure aims to provide a lithium secondary battery with enhanced flame retardancy as well as improved output characteristics under a low-temperature atmosphere and improved stability and storage characteristics under a high-temperature atmosphere by including the non-aqueous electrolyte solution for a lithium secondary battery.

### [TECHNICAL SOLUTION]

In order to achieve the above objects, in one embodiment of the present disclosure, it provides a non-aqueous electrolyte solution for a lithium secondary battery comprising a lithium salt, a non-aqueous organic solvent and an ionic liquid represented by the following Formula 1:

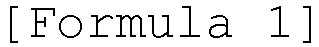

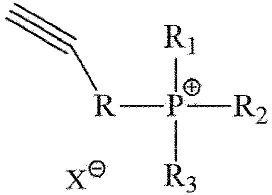

In Formula 1,
R is an alkylene group having 1 to 5 carbon atoms,
R₁ to R₃ are each independently an alkyl group having 1 to 8 carbon atoms or an aryl group having 6 to 12 carbon atoms,
X⁻ is at least one anion selected from the group consisting of BF₄⁻, PF₆⁻, ClO₄⁻, PO₂F₂⁻, CF₃SO₃⁻, CH₃CO₂⁻, CF₃CO₂⁻, SO₃CF₃⁻, (CF₃CF₂SO₂)₂N⁻, (CF₃SO₂)₂N⁻, (FSO₂)₂N⁻, CF₃CF₂SO₃⁻, CF₃CF₂(CF₃)₂CO⁻, B(C₂O₄)₂⁻ and BF₂(C₂O₄)⁻.

According to another embodiment of the present disclosure, there is provided a lithium secondary battery comprising a negative electrode, a positive electrode, a separator disposed between the negative electrode and the positive electrode, and the non-aqueous electrolyte solution for a lithium secondary battery of the present disclosure.

### [ADVANTAGEOUS EFFECTS]

As a phosphonium salt-based ionic liquid represented by Formula 1 included in the non-aqueous electrolyte solution of the present disclosure includes a propargyl group in its structure, it may form a solid film with low resistance on the electrode surface through an oxidation/reduction reaction. Therefore, if the non-aqueous electrolyte solution of the present disclosure comprising a phosphonium salt-based ionic liquid represented by Formula 1 is used, a lithium secondary battery which has enhanced flame retardancy as well as improved capacity characteristics and is capable of securing excellent high-temperature storage stability may be achieved by minimizing an increase in resistance at low temperatures.

### [DESCRIPTION OF DRAWINGS]

The accompanying drawings illustrate a preferred embodiment of the present disclosure and together with the foregoing disclosure, serve to provide further understanding of the technical features of the present disclosure, and thus, the present disclosure is not construed as being limited to the drawings.

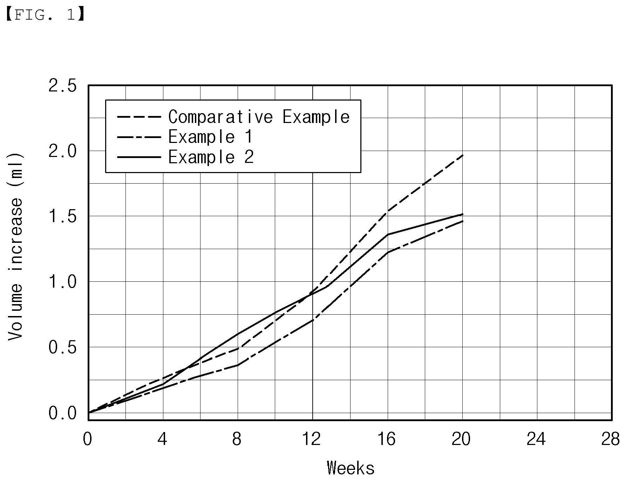

Fig. 1 is a graph showing the results of evaluating the thickness increase rate of the lithium secondary battery according to Experimental Example 2 during high-temperature storage.

### [MODE FOR CARRYING OUT THE INVENTION]

Hereinafter, the present disclosure will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

### Non-aqueous Electrolyte Solution for Lithium Secondary Battery

Specifically, in an embodiment, the present disclosure provides a non-aqueous electrolyte solution for a lithium secondary battery including a lithium salt, a non-aqueous organic solvent, and an ionic liquid represented by the following Formula 1:

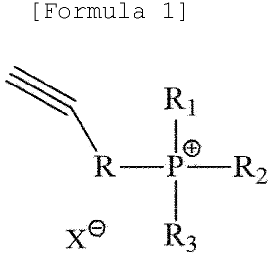

In Formula 1,
R is an alkylene group having 1 to 5 carbon atoms,
R₁ to R₃ are each independently an alkyl group having 1 to 8 carbon atoms or an aryl group having 6 to 12 carbon atoms, and
X⁻ is at least one anion selected from the group consisting of BF₄⁻, PF₆⁻, ClO₄⁻, PO₂F₂⁻, CF₃SO₃⁻, CH₃CO₂⁻, CF₃CO₂⁻, SO₃CF₃⁻, (CF₃CF₂SO₂)₂N⁻, (CF₃SO₂)₂N⁻, (FSO₂)₂N⁻, CF₃CF₂SO₃⁻, CF₃CF₂(CF₃)₂CO⁻, B(C₂O₄)₂⁻ and BF₂(C₂O₄)⁻.

### (1) Lithium Salt

First, a lithium salt will be described as follows.

The lithium salt typically used in a non-aqueous electrolyte solution for a lithium secondary battery may be used as the lithium salt without limitation, and, for example, the lithium salt may include Li⁺ as a cation, and may include at least one selected from F⁻, Cl⁻, Br⁻, I⁻, NO₃⁻, N(CN)₂⁻, BF₄⁻, ClO₄⁻, B₁₀Cl₁₀⁻, AlCl₄⁻, AlO₄⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ or SCN⁻ as an anion.

Specifically, the lithium salt may include a single material selected from the group consisting of LiCl, LiBr, LiI, LiBF₄, LiClO₄, LiB₁₀Cl₁₀, LiAlCl₄, LiAlO₄, LiPF₆, LiCF₃SO₃, LiCH₃CO₂, LiCF₃CO₂, LiAsF₆, LiSbF₆, LiCH₃SO₃, LiFSI (Lithium bis (fluorosulfonyl) imide, LiN(SO₂F)₂), LiBETI (Lithium bis(pentafluoroethanesulfonyl) imide, LiN(SO₂CF₂CF₃)₂ and LiTFSI (Lithium bis(trifluoromethanesulfonyl) imide, LiN(SO₂CF₃)₂) or a mixture of two or more thereof, and in addition to the above-described lithium salt, any lithium salt commonly used in an electrolyte solution of a lithium secondary battery may be used without limitation. Specifically, the lithium salt may include LiPF₆.

The lithium salt may be appropriately changed in a normally usable range, but may be present in a concentration of 0.8 M to 3.0 M, and specifically, 1.0 M to 3.0 M in the electrolyte solution to obtain an optimum effect of forming a film for preventing corrosion of a surface of an electrode. In a case in which the concentration of the lithium salt satisfies the above range, viscosity of the non-aqueous electrolyte solution may be controlled so that optimum impregnability may be achieved, and an effect of improving capacity characteristics and cycle characteristics of the lithium secondary battery may be obtained by improving mobility of lithium ions.

### (2) Non-aqueous Organic Solvent

Also, a non-aqueous organic solvent will be described as follows.

Various organic solvents commonly used in a non-aqueous electrolyte solution may be used as the non-aqueous organic solvent without limitation. A type of the non-aqueous organic solvent is not limited as long as decomposition due to an oxidation reaction during charge and discharge of the secondary battery can be minimized and desired properties can be exhibited together with an additive. Specifically, the non-aqueous organic solvent may include a cyclic carbonate-based organic solvent, a linear carbonate-based organic solvent, a linear ester-based organic solvent, or a mixture thereof.

The cyclic carbonate-based organic solvent has high permittivity and is a high-viscosity organic solvent that easily dissociates lithium salts in a non-aqueous electrolyte solution, and specific examples thereof may include at least one compound selected from the group consisting of ethylene carbonate (EC), propylene carbonate (PC), 1,2-butylene carbonate, 2,3-butylene carbonate, 1,2-pentylene carbonate, 2,3-pentylene carbonate and vinylene carbonate, and among these, ethylene carbonate may be included.

The linear carbonate-based organic solvent is an organic solvent having low viscosity and low permittivity, wherein, as specific examples thereof, at least one compound selected from the group consisting of dimethyl carbonate (DMC), diethyl carbonate (DEC), dipropyl carbonate, ethylmethyl carbonate (EMC), methylpropyl carbonate and ethylpropyl carbonate may be included, and specifically, ethylmethyl carbonate (EMC) may be included.

The linear ester-based organic solvent is a solvent having relatively higher stability during high-temperature and high-voltage operation than the cyclic carbonate-based organic solvent, wherein it may improve the disadvantages of the cyclic carbonate-based organic solvent causing gas generation during high-voltage operation and may achieve high ionic conductivity at the same time.

As specific examples, the linear ester-based organic solvent may include at least one organic solvent selected from the group consisting of methyl acetate, ethyl acetate, propyl acetate, methyl propionate, ethyl propionate, propyl propionate, and butyl propionate, and may specifically include at least one of ethyl propionate and propyl propionate.

Also, the non-aqueous electrolyte solution of the present disclosure may further include a cyclic ester-based organic solvent, if necessary.

The cyclic ester-based organic solvent may include at least one selected from γ-butyrolactone, γ-valerolactone, γ-caprolactone, σ-valerolactone, or ε-caprolactone.

A remainder excluding the lithium salt and compound represented by Formula 1 which is an additive in the non-aqueous electrolyte solution of the present disclosure may all be the non-aqueous organic solvent unless otherwise stated.

### (3) Ionic liquid represented by Formula 1

The non-aqueous electrolyte solution for a lithium secondary battery of the present disclosure may include an ionic liquid represented by the following Formula 1 as an additive.

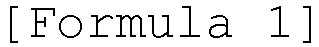

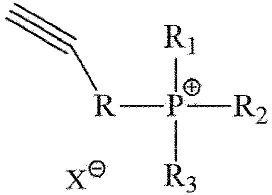

In Formula 1,
R is an alkylene group having 1 to 5 carbon atoms,
R₁ to R₃ are each independently an alkyl group having 1 to 8 carbon atoms or an aryl group having 6 to 12 carbon atoms, and
X⁻ is at least one anion selected from the group consisting of BF₄⁻, PF₆⁻, ClO₄⁻, PO₂F₂⁻, CF₃SO₃⁻, CH₃CO₂⁻, CF₃CO₂⁻, SO₃CF₃⁻, (CF₃CF₂SO₂)₂N⁻, (CF₃SO₂)₂N⁻, (FSO₂)₂N⁻, CF₃CF₂SO₃⁻, CF₃CF₂(CF₃)₂CO⁻, B (C₂O₄)₂⁻ and BF₂(C₂O₄)⁻.

As a phosphonium salt-based ionic liquid represented by Formula 1 above includes a propargyl group in its structure, it may further promote the reaction of film-forming additives such as ethylene carbonate (EC), vinylene carbonate (VC), or vinylethylene carbonate (VEC) through a stable oxidation/reduction reaction as compared to the phosphonium salt-based ionic liquid containing double bonds, and thus may further strength film durability as it may form a robust film in the copolymerized form with low resistance on the surface of the electrode.

Also, the phosphonium salt-based ionic liquid represented by Formula 1 is a non-volatile compound and has higher flame retardancy than organic solvents such as ethylene carbonate (EC), which is included as the main component of conventional non-aqueous electrolyte solutions, and thus may reduce a possibility of ignition by improving the flame retardancy of a lithium secondary battery under a high temperature atmosphere. flame retardancy. As such, if the non-aqueous electrolyte solution of the present disclosure comprising a phosphonium salt-based ionic liquid represented by Formula 1 is applied, a lithium secondary battery which has enhanced flame retardancy as well as improved low-temperature output characteristics and stability and storage characteristics under a high-temperature atmosphere may be achieved by minimizing an increase in resistance under a low temperature atmosphere.

Specifically, in Formula 1 above, R is an alkylene group having 1 to 3 carbon atoms, R₁ to R₃ are each independently an alkyl group having 1 to 5 carbon atoms or a phenyl group, and X⁻ may be at least one anion selected from the group consisting of BF₄⁻, PF₆⁻, ClO₄⁻, PO₂F₂⁻, CF₃SO₃⁻, SO₃CF₃⁻, (CF₃CF₂SO₂)₂N⁻, (CF₃SO₂)₂N⁻, (FSO₂)₂N⁻, CF₃CF₂SO₃⁻, CF₃CF₂(CF₃)₂CO⁻ and BF₂(C₂O₄)⁻.

Also, in Formula 1 above, R₁ to R₃ may be each independently a methyl group, an ethyl group or a phenyl group.

More specifically, the ionic liquid represented by Formula 1 may be at least one of compounds represented by Formulas 1-1 to 1-4 below.

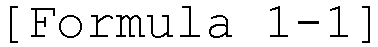

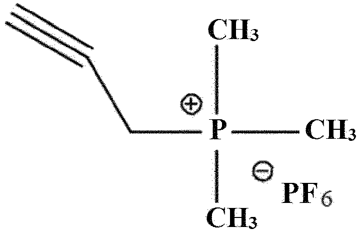

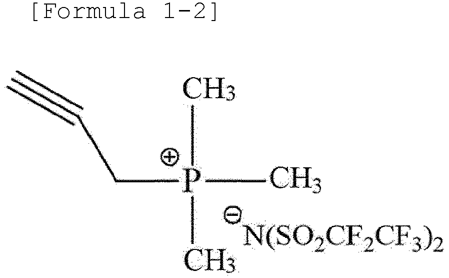

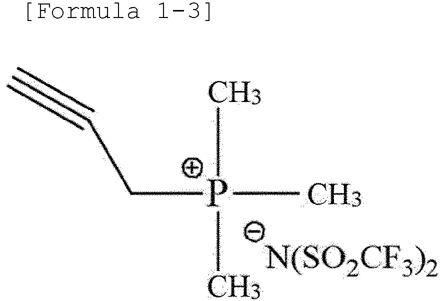

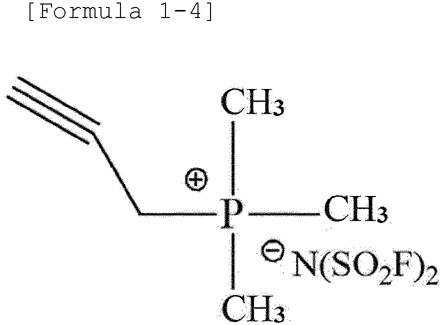

Also, the ionic liquid represented by Formula 1 may be included in the amount of 0.3 wt% to 50.0 wt% based on a total weight of the non-aqueous electrolyte solution.

If the amount of the ionic liquid represented by Formula 1 satisfies the above range, it may secure safe high and low temperature capacity characteristics while achieving the effect of enhancing flame retardancy by forming a stable passivation film with low resistance on the surface of the positive electrode and negative electrode.

Specifically, the ionic liquid represented by Formula 1 may be included in the amount of 0.5 wt% to 30.0 wt%, preferably 0.5 wt% to 20.0 wt% based on a total weight of the non-aqueous electrolyte solution.

### (4) Other Additives

Also, the non-aqueous electrolyte solution for a lithium secondary battery of the present disclosure may further include other additives in the non-aqueous electrolyte solution, if necessary, in order to prevent the occurrence of the collapse of the negative electrode due to the decomposition of the non-aqueous electrolyte solution in a high power environment or to further improve low-temperature high rate discharge characteristics, high-temperature stability, overcharge prevention, and an effect of suppressing battery swelling at high temperatures.

As a typical example, these other additives may include at least one additive selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The cyclic carbonate-based compound may be vinylene carbonate (VC) or vinylethylene carbonate.

The halogen-substituted carbonate-based compound may be fluoroethylene carbonate (FEC).

The sultone-based compound may be at least one compound selected from the group consisting of 1,3-propane sultone (PS), 1,4-butane sultone, ethane sultone, 1,3-propene sultone (PRS), 1,4-butene sultone, and 1-methyl-1,3-propene sultone.

The sulfate-based compound may be ethylene sulfate (Esa), trimethylene sulfate (TMS), or methyl trimethylene sulfate (MTMS).

The phosphate-based compound may include at least one compound selected from the group consisting of lithium difluoro(bisoxalato)phosphate, lithium difluorophosphate, tris(trimethylsilyl) phosphate, tris(2,2,2-trifluoroethyl) phosphate, and tris(trifluoroethyl) phosphate.

The borate-based compound may include tetraphenylborate and lithium oxalyldifluoroborate.

The nitrile-based compound may include at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may be fluorobenzene, the amine-based compound may be triethanolamine or ethylene diamine, and the silane-based compound may be tetravinylsilane.

The lithium salt-based compound is a compound different from the lithium salt included in the non-aqueous electrolyte solution, wherein the lithium salt-based compound may include at least one compound selected from the group consisting of LiPO₂F₂, LiODFB, LiBOB (lithium bis (oxalato) borate (LiB(C₂O₄)₂)), and LiBF₄.

In a case in which vinylene carbonate, vinylethylene carbonate, or succinonitrile, among these other additives is further included, a more robust SEI may be formed on the surface of the negative electrode during an initial activation process of the secondary battery.

Two or more other additives may be mixed and used, and the additive may be included in an amount of 50 wt% or less, specifically 0.01 wt % to 10 wt %, and preferably 0.05 wt % to 5 wt % based on the total weight of the non-aqueous electrolyte solution. If the amount of the additive is less than 0.01 wt %, an effect of improving low-temperature output, high-temperature storage characteristics, and high-temperature life characteristics of the battery is insignificant, and, if the amount of the additive is greater than 50 wt %, the side reactions in the electrolyte solution may excessively occur during charge and discharge of the battery. Particularly, if the excessive amount of the additives for forming an SEI is added, the additives may not be sufficiently decomposed at high temperatures so that they may be present in the form of an unreacted material or being precipitated in the electrolyte solution at room temperature. Accordingly, side reactions that degrade life or resistance characteristics of the secondary battery may occur.

### Lithium Secondary Battery

Also, in another embodiment of the present disclosure, there is provided a lithium secondary battery including a positive electrode, a negative electrode, a separator disposed between the positive electrode and the negative electrode, and the non-aqueous electrolyte solution of the present disclosure.

After an electrode assembly, in which the positive electrode, negative electrode, and separator between the positive electrode and the negative electrode are sequentially stacked, is formed and accommodated in a battery case, the lithium secondary battery of the present disclosure may be prepared by injecting the non-aqueous electrolyte solution of the present disclosure thereinto.

The lithium secondary battery of the present disclosure may be prepared according to a conventional method known in the art and used, and are specifically the same as those described later.

### (1) Positive Electrode

The positive electrode according to the present disclosure may include a positive electrode active material layer including a positive electrode active material, and, if necessary, the positive electrode active material layer may further include a conductive agent and/or a binder.

The positive electrode active material is a compound capable of reversibly intercalating and deintercalating lithium, wherein the positive electrode active material may specifically include a lithium composite metal oxide represented by the following Formula (2) including lithium and at least one metal selected from the group consisting of nickel (Ni), cobalt (Co), manganese (Mn), iron (Fe), and aluminum (Al).

[Formula 2] Li₁₊ₐNiₓCo_{y}M¹_{z}M²O₂

In Formula 2,
M¹ is Mn, Al or a combination thereof,
M² is at least one selected from Al, Zr, W, Ti, Mg, Ca or Sr, wherein 0≤a≤0.5, 0<x≤1.0, 0<y≤0.4, 0<z≤0.4, 0≤w≤0.1.

1+a represents an atomic fraction of lithium in a lithium transition metal oxide, and may be 0≤a≤0.5, preferably 0≤a≤0.2, and more preferably 0≤a≤0.1.

x represents an atomic fraction of nickel among all transition metal elements in the lithium transition metal oxide, and may be 0<x≤1.0, specifically 0.55<x<1.0, more specifically 0.6≤x≤0.98, and even more specifically 0.6 ≤x≤0.95.

y represents an atomic fraction of cobalt among all transition metal elements in the lithium transition metal oxide, and may be 0<y≤0.4, specifically 0<y≤0.3, and more specifically 0. 05≤y≤0.3.

z represents an atomic fraction of the element M¹ among all transition metal elements in the lithium transition metal oxide, and may be 0<z≤0.4, preferably 0<z≤0.3, and more preferably 0. 01≤z≤0.3.

w represents an atomic fraction of the element M² among all transition metal elements in the lithium transition metal oxide, and may be 0<w≤0.1, preferably 0<w≤0.05, and more preferably 0<w≤0.02.

Specifically, the positive electrode active material may include a lithium composite transition metal oxide such as Li(Ni_{0.6}Mn_{0.2}CO_{0.2})O₂, Li(Ni_{0.7}Mn_{0.15}Co_{0.15})O₂, Li(Ni_{0.7}Mn_{0.2}Co_{0.1})O₂, Li(Ni_{0.8}Mn_{0.1}Co_{0.1})O₂, Li(Ni_{0.8}Co_{0.15}Al_{0.05})O₂, Li(Ni_{0.86}Mn_{0.07}Co_{0.05}Al_{0.02})O₂ or Li(Ni_{0.90}Mn_{0.05}Co_{0.05})O₂ having a Ni content of 0.55 atm% or more to achieve a high capacity battery.

As the positive electrode active material of the present disclosure, a lithium-manganese-based oxide (e.g., LiMnO₂, LiMn₂O₄, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-Y}Mn_{Y}O₂ (where 0<Y<1), LiMn_{2-z}Ni_{z}O₄ (where 0<Z<2)), a lithium-nickel-cobalt-based oxide (e.g., LiNi_{1-Y1}Co_{Y1}O₂ (where 0<Y1<1)), a lithium-manganese-cobalt-based oxide (e.g., LiCo_{1-Y2}Mn_{Y2}O₂ (where 0<Y2<1), LiMn_{2-z1}CO_{z1}O₄ (where 0<z1<2)), or Li (Niₚ₁Co_{q1}Mnᵣ₂) O₄ (0<p1<2, 0<q1<2, 0<r2<2, p1+q1+r2=2) may be used together with a lithium composite metal oxide represented by Formula (2) above.

The positive electrode active material may be present in an amount of 80 wt% to 99 wt%, specifically, 90 wt% to 99 wt% based on the total weight of the solid content in the positive electrode slurry. Here, when the amount of the positive electrode active material is 80 wt% or less, the energy density is reduced, and thus capacity may be reduced.

Next, the conductive agent is used to provide conductivity to the electrode, wherein any conductive agent may be used without particular limitation as long as it has suitable electron conductivity without causing adverse chemical changes in the battery. Specific examples of the conductive agent may be a conductive material, such as: carbon powder such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, or nickel powder; conductive whiskers such as zinc oxide whiskers and potassium titanate whiskers; conductive metal oxide such as titanium oxide; or polyphenylene derivatives, and any one thereof or a mixture of two or more thereof may be used.

The conductive agent may be included in an amount of 0.1 wt% to 10 wt%, preferably, 0.1 wt% to 5 wt% based on a total weight of the positive electrode active material layer.

Next, the binder improves the adhesion between positive electrode active material particles and the adhesion between the positive electrode active material and a current collector.

As an example of the binder, any one of a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder or a mixture of two or more thereof may be used.

The binder may be included in an amount of 0.1 wt% to 15 wt%, preferably, 0.1 wt% to 10 wt% based on a total weight of the positive electrode active material layer.

The positive electrode of the present disclosure as described above may be prepared by a method of preparing a positive electrode which is known in the art. For example, the positive electrode may be prepared by a method in which a positive electrode current collector is coated with a positive electrode slurry, which is prepared by dissolving or dispersing the positive electrode active material, the binder, and/or the conductive agent in a solvent, dried, and then rolled to form an active material layer, or a method in which the positive electrode active material layer is cast on a separate support and a film separated from the support is then laminated on the positive electrode current collector.

The positive electrode current collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode current collector may typically have a thickness of 3 µm to 500 µm, and microscopic irregularities may be formed on the surface of the collector to improve the adhesion of the positive electrode material. The positive electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if a positive electrode material mixture may be adjusted to have appropriate viscosity in consideration of a coating thickness of the positive electrode material mixture, manufacturing yield, and workability, and is not particularly limited.

### (2) Negative Electrode

Next, a negative electrode will be described.

The negative electrode according to the present disclosure includes a negative electrode active material layer including a negative electrode active material, and the negative electrode active material layer may further include a conductive agent and/or a binder, if necessary.

Various negative electrode active materials used in the art, for example, a carbon-based negative electrode active material, a silicon-based negative electrode active material, or a mixture thereof may be used as the negative electrode active material.

According to an embodiment, the negative electrode active material may include a carbon-based negative electrode active material, and, as the carbon-based negative electrode active material, various carbon-based negative electrode active materials used in the art, for example, a graphite-based materials such as natural graphite, artificial graphite, and Kish graphite; pyrolytic carbon, mesophase pitch based carbon fiber, meso-carbon microbeads, mesophase pitches, high-temperature sintered carbon such as petroleum or coal tar pitch derived cokes, soft carbon, and hard carbon may be used. A shape of the carbon-based negative electrode active material is not particularly limited, and materials of various shapes, such as an irregular shape, planar shape, flaky shape, spherical shape, or fibrous shape, may be used.

Preferably, at least one carbon-based negative electrode active material of natural graphite and artificial graphite may be used as the negative electrode active material, and the natural graphite and artificial graphite may be used together to suppress exfoliation of the active material by increasing adhesion with the current collector.

According to another embodiment, a carbon-based negative electrode active material and a silicon-based negative electrode active material may be used together for the negative electrode active material.

The silicon-based negative electrode active material, for example, may include at least one selected from metallic silicon (Si), silicon oxide (SiOₓ, where 0<x<2), silicon carbide (SiC), or a Si-Y alloy (where Y is an element selected from the group consisting of alkali metal, alkaline earth metal, a Group 13 element, a Group 14 element, transition metal, a rare earth element, and a combination thereof, and is not Si). The element Y may be selected from the group consisting of Mg, Ca, Sr, Ba, Ra, Sc, Y, Ti, Zr, Hf, Rf, V, Nb, Ta, Db (dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

Since the silicon-based negative electrode active material has higher capacity characteristics than the carbon-based negative electrode active material, better capacity characteristics may be obtained when the silicon-based negative electrode active material is further included. However, with respect to a negative electrode including the silicon-based negative electrode active material, it contains more oxygen O-rich components in the SEI than a graphite negative electrode, and the SEI containing the O-rich components tends to be more easily decomposed when a Lewis acid, such as HF or PF₅, is present in the electrolyte solution. Thus, with respect to the negative electrode containing the silicon-based negative electrode active material, there is a need to suppress the formation of the Lewis acid, such as HF and PF₅, in the electrolyte solution or remove (or scavenge) the formed Lewis acid in order to stably maintain the SEI. Since the non-aqueous electrolyte solution according to the present disclosure includes the electrolyte solution additive capable of forming a stable film on the positive electrode and the negative electrode, it may effectively suppress the decomposition of the SEI film when the negative electrode containing the silicon-based negative electrode active material is used.

A mixing ratio of the silicon-based negative electrode active material to the carbon-based negative electrode active material may be in a range of 3:97 to 99:1, preferably, 5:95 to 15:85, as a weight ratio. When the mixing ratio of the silicon-based negative electrode active material to the carbon-based negative electrode active material satisfies the above range, since a volume expansion of the silicon-based negative electrode active material is suppressed while capacity characteristics are improved, excellent cycle performance may be secured.

The negative electrode active material may be included in an amount of 80 wt% to 99 wt% based on a total weight of the negative electrode active material layer. In a case in which the amount of the negative electrode active material satisfies the above range, excellent capacity characteristics and electrochemical properties may be obtained.

Next, the conductive agent is a component for further improving the conductivity of the negative electrode active material layer and is not particularly limited as long as it has conductivity without causing adverse chemical changes in the battery. For example, a conductive material such as carbon powder such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used. The conductive agent may be added in an amount of 10 wt% or less, preferably, 5 wt% or less based on a total weight of the negative electrode active material layer.

The binder is a component that assists in the binding between the conductive agent, the active material, and the current collector. Examples of the binder may be a fluorine resin-based binder including polyvinylidene fluoride (PVDF) or polytetrafluoroethylene (PTFE); a rubber-based binder including a styrene-butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The binder may be commonly included in an amount of 0.1 wt % to 15 wt %, preferably 0.1 wt % to 10 wt % based on a total weight of the negative electrode active material layer.

The negative electrode may be prepared by a method of preparing a negative electrode which is known in the art. For example, the negative electrode may be prepared by a method in which a negative electrode current collector is coated with a negative electrode slurry, which is prepared by dissolving or dispersing the negative electrode active material as well as optionally the binder and the conductive agent in a solvent, rolled and dried, or may be prepared by casting the negative electrode slurry on a separate support and then laminating a film separated from the support on the negative electrode current collector.

The negative electrode current collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. The negative electrode current current collector may typically have a thickness of 3 µm to 500 µm, and, similar to the positive electrode current collector, microscopic irregularities may be formed on the surface of the current collector to improve the adhesion of the negative electrode active material. The negative electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the negative electrode slurry may be adjusted to have an appropriate viscosity in consideration of a coating thickness of the negative electrode material mixture, manufacturing yield, and workability, and is not particularly limited.

### (3) Separator

As the separator included in the lithium secondary battery of the present disclosure, a typical porous polymer film generally used, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith, and a typical porous nonwoven fabric, for example, a nonwoven fabric formed of high melting point glass fibers or polyethylene terephthalate fibers may be used, but the present disclosure is not limited thereto.

A shape of the lithium secondary battery of the present disclosure is not particularly limited, but a cylindrical type using a can, a prismatic type, a pouch type, or a coin type may be used.

### [EXAMPLES]

### Example 1.

### (Preparation of Non-aqueous Electrolyte Solution)

LiPF₆ was dissolved in a non-aqueous organic solvent, in which ethylene carbonate (EC) and ethylmethyl carbonate (EMC) were mixed in a volume ratio of 30:70, such that a concentration of the LiPF₆ was 1.0M, and a non-aqueous electrolyte solution was prepared by adding 0.5 wt% of the compound represented by Formula 1-1 and 1.0 wt% of vinylene carbonate, 1.0 wt% of 1,3-propanesultone and 1.0 wt% of ethylene sulfate as other additives.

### (Secondary Battery Preparation)

A positive electrode active material (Li(Ni_{0.86}Mn_{0.07}Co_{0.05}Al_{0.02})O₂), a conductive agent (carbon black), and a binder (polyvinylidene fluoride) were added to N-methyl-2-pyrrolidone (NMP) in a weight ratio of 97.5:1:1.5 to prepare a positive electrode slurry (solid content: 50 wt %). A 12 µm thick aluminum (Al) thin film, which is a positive electrode current collector, was coated with the positive electrode slurry, dried, and then roll-pressed to prepare a positive electrode.

A negative electrode active material (graphite), a binder (SBR-CMC), and a conductive agent (carbon black) were added to water, which is a solvent, in a weight ratio of 95:3.5:1.5 to prepare a negative electrode slurry (solid content: 60 wt %). A 6 µm thick copper (Cu) thin film, which is a negative electrode current collector, was coated with the negative electrode slurry, dried, and then roll-pressed to prepare a negative electrode.

After an electrode assembly was prepared by sequentially stacking the positive electrode, a polyolefin-based porous separator coated with inorganic particles (Al₂O₃), and the negative electrode, the electrode assembly was accommodated in a pouch-type battery case, and the non-aqueous electrolyte solution for a lithium secondary battery was injected thereinto to prepare a pouch-type lithium secondary battery having the operation voltage of 4.45V or more.

### Example 2.

### (Preparation of Non-aqueous Electrolyte Solution)

LiPF₆ was dissolved in a non-aqueous organic solvent, in which ethylene carbonate (EC) and ethylmethyl carbonate (EMC) were mixed in a volume ratio of 30:70, such that a concentration of the LiPF₆ was 1.0M, and a non-aqueous electrolyte solution was prepared by adding 2.0 wt% of the compound represented by Formula 1-1 and 1.0 wt% of vinylene carbonate, 1.0 wt% of 1,3-propanesultone and 1.0 wt% of ethylene sulfate as other additives.

### (Secondary Battery Preparation)

A pouch-type lithium secondary battery was prepared in the same manner as in Example 1 except that the above prepared non-aqueous electrolyte solution was injected.

### Example 3.

### (Preparation of Non-aqueous Electrolyte Solution)

LiPF₆ was dissolved in a non-aqueous organic solvent, in which ethylene carbonate (EC) and ethylmethyl carbonate (EMC) were mixed in a volume ratio of 30:70, such that a concentration of the LiPF₆ was 1.0M, and a non-aqueous electrolyte solution was prepared by adding 30.0 wt% of the compound represented by Formula 1-1 and 1.0 wt% of vinylene carbonate, 1.0 wt% of 1,3-propanesultone and 1.0 wt% of ethylene sulfate as other additives.

### (Secondary Battery Preparation)

A pouch-type lithium secondary battery was prepared in the same manner as in Example 1 except that the above prepared non-aqueous electrolyte solution was injected.

### Comparative Example

LiPF₆ was dissolved in a non-aqueous organic solvent, in which ethylene carbonate (EC) and ethylmethyl carbonate (EMC) were mixed in a volume ratio of 30:70, such that a concentration of the LiPF₆ was 1.0M, and a pouch-type lithium secondary battery was prepared in the same manner as in Example 1 except that a non-aqueous electrolyte solution was prepared by adding 1.0 wt% of vinylene carbonate, 1.0 wt% of 1,3-propanesultone and 1.0 wt% of ethylene sulfate.

### [Experimental Examples]

### Experimental Example 1. Evaluation of Low-Temperature Output Characteristics

After each of the lithium secondary batteries prepared in Examples 1 and 2 and Comparative Example was charged at 0.04C rate to 4.2V under a constant current condition at room temperature (25°C), the lithium secondary batteries were discharged to 3.0V under a CC condition. The charging and discharging were set as one cycle. After 3 cycles of the charging and discharging were performed, the initial discharge capacity was measured and the results thereof are presented in Table 1 below.

Subsequently, after being charged at 0.04C rate under a CC condition to a SOC of 10% and being stored for 1 hour under a low-temperature condition (-10°C), the discharge capacity after 1 hour was calculated as a percentage based on the initial discharge capacity, and the measured results are presented in Table 1 below.

**[Table 1]**

| | Initial capacity (mAh) at room temperature (25°C) | Capacity (%) after low-temperature (-10°C) storage |
|---|---|---|
| Example 1 | 2,000 | 79.06 |
| Example 2 | 1,999 | 84.10 |
| Comparative Example 1 | 2, 004 | 71.82 |

Referring to Table 1 above, it may be understood that the lithium secondary batteries of Examples 1 and 2 of the present disclosure had a relatively lower initial capacity at room temperature when compared to that of the Comparative Example, but had improved capacity retention after low-temperature storage compared to the lithium secondary battery of the Comparative Example.

### Experimental Example 2. Evaluation of High-temperature Storage Characteristics

After each of the lithium secondary batteries prepared in Examples 1 and 2 and Comparative Example was charged at 0.04C rate to 4.2V under a constant current condition at room temperature (25°C), the lithium secondary batteries were discharged to 3.0V under a CC condition. The charging and discharging were set as one cycle. After 3 cycles of the charging and discharging were performed, the initial discharge capacity was measured.

Subsequently, after being charged at 0.04C rate under a CC condition to a SOC of 100%, the thickness increase was measured every 4 weeks during 20-week storage under a high-temperature condition (60°C), and the results thereof are presented in Fig. 1 below.

Referring to Fig. 1, it may be understood that the lithium secondary batteries of Examples 1 and 2 of the present disclosure exhibited relatively lower thickness increase rates compared to the lithium secondary battery of the Comparative Example as the amount of gas generated during the high-temperature storage decreased.

### Experimental Example 3. Evaluation of High-temperature stability characteristics

After each of the lithium secondary battery prepared in Example 3 and Comparative Example was charged at 0.04C rate to 4.2V under a constant current condition at room temperature (25°C), the lithium secondary batteries were discharged to 3.0V under a CC condition. The charging and discharging were set as one cycle. After 3 cycles of the charging and discharging were performed, the initial discharge capacity was measured.

Subsequently, after being charged at 0.04C rate to a SOC of100% under a constant current condition, the amount of heat generated inside the battery was measured while raising the temperature to a high temperature (300°C), and the results are shown in Table 2 below.

**[Table 2]**

| | Amount of heat (J) |
|---|---|
| Example 3 | 264 |
| Comparative Example | 499 |

Referring to Table 2, it may be understood the lithium secondary battery prepared in Example 3 of the present disclosure exhibited improved high-temperature stability due to a decrease in the amount of heat at high temperatures compared to the lithium secondary battery of the Comparative Example.

## Claims

1. A non-aqueous electrolyte solution for a lithium secondary battery comprising a lithium salt, a non-aqueous organic solvent, and an ionic liquid represented by Formula 1: 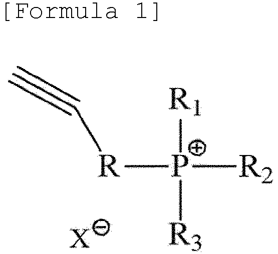 wherein in Formula 1,
R is an alkylene group having 1 to 5 carbon atoms,
R₁ to R₃ are each independently an alkyl group having 1 to 8 carbon atoms or an aryl group having 6 to 12 carbon atoms, and
X⁻ is at least one anion selected from the group consisting of BF₄⁻, PF₆⁻, ClO₄⁻, PO₂F₂⁻, CF₃SO₃⁻, CH₃CO₂⁻, CF₃CO₂⁻, SO₃CF₃⁻, (CF₃CF₂SO₂)₂N⁻, (CF₃SO₂)₂N⁻, (FSO₂)₂N⁻, CF₃CF₂SO₃⁻, CF₃CF₂(CF₃)₂CO⁻, B(C₂O₄)₂⁻, and BF₂(C₂O₄)⁻.

2. The non-aqueous electrolyte solution for a lithium secondary battery of claim 1,
wherein R is an alkylene group having 1 to 3 carbon atoms,
R₁ to R₃ are each independently an alkyl group having 1 to 5 carbon atoms or a phenyl group, and
X⁻ is at least one anion selected from the group consisting of BF₄⁻, PF₆⁻, ClO₄⁻, PO₂F₂⁻, CF₃SO₃⁻, SO₃CF₃⁻, (CF₃CF₂SO₂) ₂N⁻, (CF₃SO₂)₂N⁻, (FSO₂)₂N⁻, CF₃CF₂SO₃⁻, CF₃CF₂(CF₃)₂CO⁻ and BF₂(C₂O₄)⁻.

3. The non-aqueous electrolyte solution for a lithium secondary battery of claim 1, wherein R₁ to R₃ are each independently a methyl group, an ethyl group or a phenyl group.

4. The non-aqueous electrolyte solution for a lithium secondary battery of claim 1, wherein the ionic liquid represented by Formula 1 is at least one of compounds represented by Formula 1-1 to Formula 1-4 below:

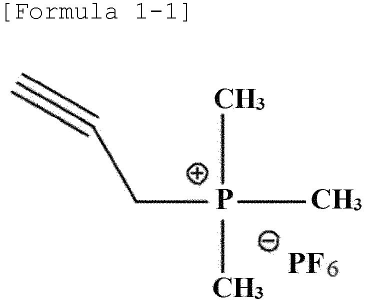

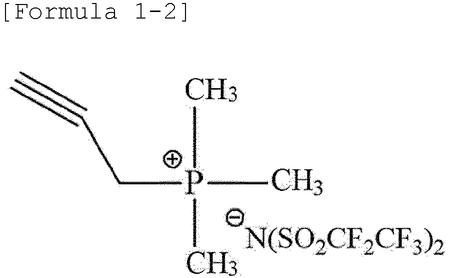

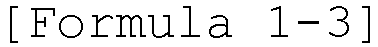

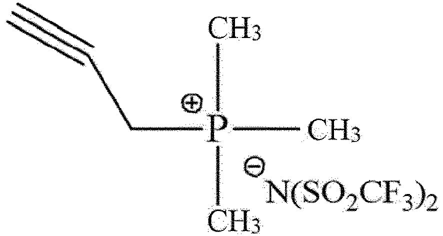

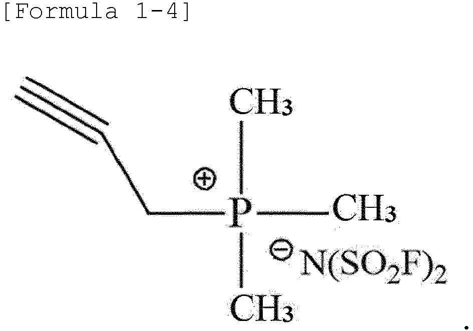

5. The non-aqueous electrolyte solution for a lithium secondary battery of claim 1, wherein the ionic liquid represented by Formula 1 is included in an amount of 0.3 wt% to 50.0 wt% based on a total weight of the non-aqueous electrolyte solution for a lithium secondary battery.

6. The non-aqueous electrolyte solution for a lithium secondary battery of claim 5, wherein the ionic liquid represented by Formula 1 is included in an amount of 0.5 wt% to 30.0 wt% based on a total weight of the non-aqueous electrolyte solution for a lithium secondary battery.

7. The non-aqueous electrolyte solution for a lithium secondary battery of claim 1, further comprising at least one other additive selected from the group consisting of a cyclic carbonate-based compound, a halogen-substituted carbonate-based compound, a sultone-based compound, a sulfate-based compound, a phosphate-based compound, a borate-based compound, a benzene-based compound, an amine-based compound, a silane-based compound, and a lithium salt-based compound.

8. A lithium secondary battery, comprising a negative electrode, a positive electrode, a separator disposed between the negative electrode and the positive electrode, and a non-aqueous electrolyte solution, wherein the non-aqueous electrolyte solution includes the non-aqueous electrolyte solution for a lithium secondary battery of claim 1.

## Patentansprüche

1. Nichtwässrige Elektrolytlösung für eine Lithium-Sekundärbatterie, umfassend ein Lithiumsalz, ein nichtwässriges organisches Lösungsmittel und eine durch Formel 1 dargestellte ionische Flüssigkeit: 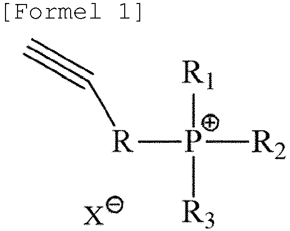
worin in der Formel 1
R eine Alkylengruppe mit 1 bis 5 Kohlenstoffatomen ist, R₁ bis R₃ jeweils unabhängig eine Alkylgruppe mit 1 bis 8 Kohlenstoffatomen oder eine Arylgruppe mit 6 bis 12 Kohlenstoffatomen sind und
X⁻ mindestens ein Anion ist, das ausgewählt ist aus der Gruppe bestehend aus BF₄⁻, PF₆⁻, ClO₄⁻, PO₂F₂⁻, CF₃SO₃⁻, CH₃CO₂⁻, CF₃CO₂⁻, SO₃CF₃⁻, (CF₃CF₂SO₂)₂N⁻, (CF₃SO₂)₂N⁻, (FSO₂)₂N⁻, CF₃CF₂SO₃⁻, CF₃CF₂(CF₃)₂CO⁻, B(C₂O₄)₂⁻ und BF₂(C₂O₄)⁻.

2. Nichtwässrige Elektrolytlösung für eine Lithium-Sekundärbatterie gemäß Anspruch 1,
worin R eine Alkylengruppe mit 1 bis 3 Kohlenstoffatomen ist,
R₁ bis R₃ jeweils unabhängig eine Alkylgruppe mit 1 bis 5 Kohlenstoffatomen oder eine Phenylgruppe sind und
X⁻ mindestens ein Anion ist, das ausgewählt ist aus der Gruppe bestehend aus BF₄⁻, PF₆⁻, ClO₄⁻, PO₂F₂⁻, CF₃SO₃⁻, SO₃CF₃⁻, (CF₃CF₂SO₂)₂N⁻, (CF₃SO₂)₂N⁻, (FSO₂)₂N⁻, CF₃CF₂SO₃⁻, CF₃CF₂(CF₃)₂CO⁻ und BF₂(C₂O₄ )⁻.

3. Nichtwässrige Elektrolytlösung für eine Lithium-Sekundärbatterie gemäß Anspruch 1, worin R₁ bis R₃ jeweils unabhängig eine Methylgruppe, eine Ethylgruppe oder eine Phenylgruppe sind.

4. Nichtwässrige Elektrolytlösung für eine Lithium-Sekundärbatterie gemäß Anspruch 1, wobei die durch Formel 1 dargestellte ionische Flüssigkeit mindestens eine der durch die nachstehenden Formeln 1-1 bis 1-4 dargestellten Verbindungen ist:

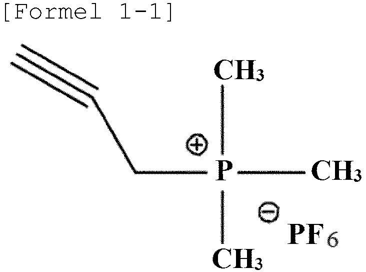

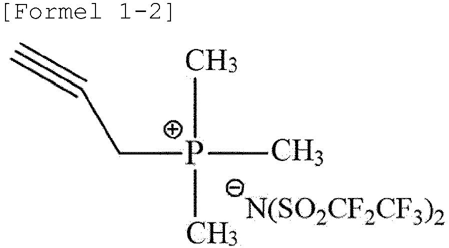

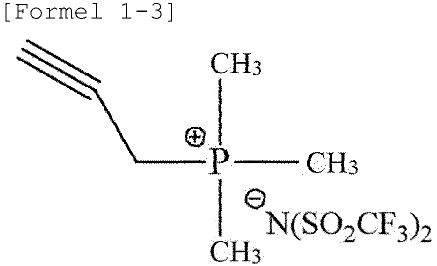

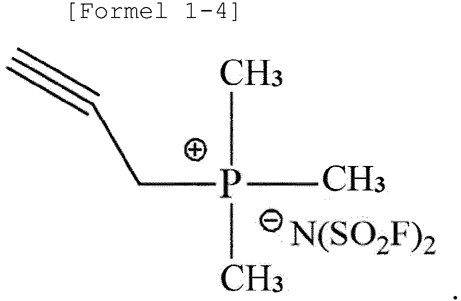

5. Nichtwässrige Elektrolytlösung für eine Lithium-Sekundärbatterie gemäß Anspruch 1, wobei die durch Formel 1 dargestellte ionische Flüssigkeit in einer Menge von 0,3 Gew.-% bis 50,0 Gew.-%, bezogen auf das Gesamtgewicht der nichtwässrigen Elektrolytlösung für eine Lithium-Sekundärbatterie, enthalten ist.

6. Nichtwässrige Elektrolytlösung für eine Lithium-Sekundärbatterie gemäß Anspruch 5, wobei die durch Formel 1 dargestellte ionische Flüssigkeit in einer Menge von 0,5 Gew.-% bis 30,0 Gew.-%, bezogen auf das Gesamtgewicht der nichtwässrigen Elektrolytlösung für eine Lithium-Sekundärbatterie, enthalten ist.

7. Nichtwässrige Elektrolytlösung für eine Lithium-Sekundärbatterie gemäß Anspruch 1, ferner umfassend mindestens ein weiteres Additiv, das ausgewählt ist aus der Gruppe bestehend aus einer Verbindung auf Basis eines cyclischen Carbonats, einer halogensubstituierten Verbindung auf Carbonatbasis, einer Verbindung auf Sultonbasis, einer Verbindung auf Sulfatbasis, einer Verbindung auf Phosphatbasis, einer Verbindung auf Boratbasis, einer Verbindung auf Benzolbasis, einer Verbindung auf Aminbasis, einer Verbindung auf Silanbasis und einer Verbindung auf Lithiumsalzbasis.

8. Lithium-Sekundärbatterie, umfassend eine negative Elektrode, eine positive Elektrode, einen zwischen der negativen Elektrode und der positiven Elektrode angeordneten Separator und eine nichtwässrige Elektrolytlösung, wobei die nichtwässrige Elektrolytlösung die nichtwässrige Elektrolytlösung für eine Lithium-Sekundärbatterie gemäß Anspruch 1 umfasst.

## Revendications

1. Solution électrolytique non aqueuse pour batterie secondaire au lithium comprenant un sel de lithium, un solvant organique non aqueux, et un liquide ionique représenté par la formule 1 : 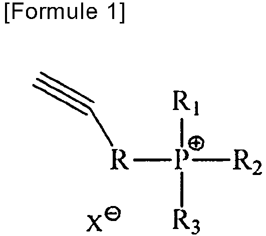
dans laquelle, dans la formule 1,
R est un groupe alkylène présentant 1 à 5 atomes de carbone,
R₁ à R₃ sont chacun indépendamment un groupe alkyle présentant 1 à 8 atomes de carbone ou un groupe aryle présentant 6 à 12 atomes de carbone, et
X⁻ est au moins un anion sélectionné dans le groupe consistant en BF₄⁻, PF₆⁻, ClO₄⁻, PO₂F₂⁻, CF₃SO₃⁻, CH₃CO₂⁻, CF₃CO₂⁻, SO₃CF₃⁻, (CF₃CF₂SO₂)₂N⁻, (CF₃SO₂)₂N⁻, (FSO₂)₂N⁻, CF₃CF₂SO₃⁻, CF₃CF₂(CF₃)₂CO⁻, B(C₂O₄)₂⁻, et BF₂(C₂O₄)⁻.

2. Solution électrolytique non aqueuse pour batterie secondaire au lithium selon la revendication 1,
dans laquelle R est un groupe alkylène présentant 1 à 3 atomes de carbone,
R₁ à R₃ sont chacun indépendamment un groupe alkyle présentant 1 à 5 atomes de carbone ou un groupe phényle, et
X⁻ est au moins un anion sélectionné dans le groupe consistant en BF₄⁻, PF₆⁻, ClO₄⁻, PO₂F₂⁻, CF₃SO₃⁻, SO₃CF₃⁻, (CF₃CF₂SO₂)₂N⁻, (CF₃SO₂)₂N⁻, (FSO₂)₂N⁻, CF₃CF₂SO₃⁻, CF₃CF₂(CF₃)₂CO⁻ et BF₂(C₂O₄)⁻.

3. Solution électrolytique non aqueuse pour batterie secondaire au lithium selon la revendication 1, dans laquelle R₁ à R₃ sont chacun indépendamment un groupe méthyle, un groupe éthyle ou un groupe phényle.

4. Solution électrolytique non aqueuse pour batterie secondaire au lithium selon la revendication 1, dans laquelle le liquide ionique représenté par la formule 1 est au moins un des composés représentés par la formule 1-1 à la formule 1-4 ci-dessous :

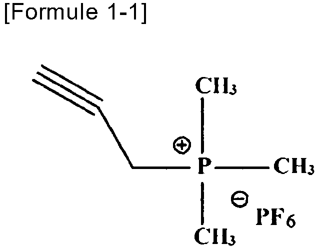

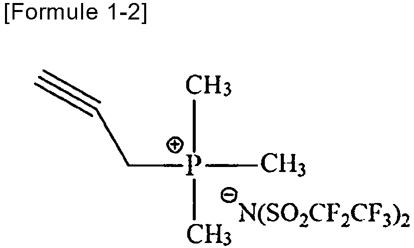

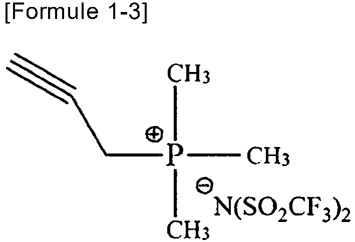

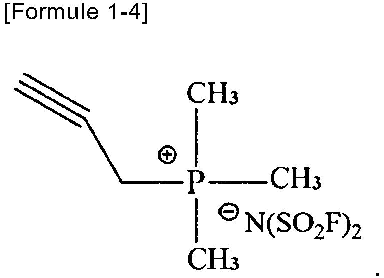

5. Solution électrolytique non aqueuse pour batterie secondaire au lithium selon la revendication 1, dans laquelle le liquide ionique représenté par la formule 1 est inclus en une quantité de 0,3 % en poids à 50,0 % en poids par rapport au poids total de la solution électrolytique non aqueuse pour batterie secondaire au lithium.

6. Solution électrolytique non aqueuse pour batterie secondaire au lithium selon la revendication 5, dans laquelle le liquide ionique représenté par la formule 1 est inclus en une quantité de 0,5 % en poids à 30,0 % en poids par rapport au poids total de la solution électrolytique non aqueuse pour batterie secondaire au lithium.

7. Solution électrolytique non aqueuse pour batterie secondaire au lithium selon la revendication 1, comprenant en outre au moins un autre additif sélectionné dans le groupe consistant en un composé à base de carbonate cyclique, un composé à base de carbonate substitué par un halogène, un composé à base de sultone, un composé à base de sulfate, un composé à base de phosphate, un composé à base de borate, un composé à base de benzène, un composé à base d'amine, un composé à base de silane et un composé à base de sel de lithium.

8. Batterie secondaire au lithium, comprenant une électrode négative, une électrode positive, un séparateur disposé entre l'électrode négative et l'électrode positive, et une solution électrolytique non aqueuse, dans lequelle la solution électrolytique non aqueuse inclut la solution électrolytique non aqueuse pour batterie secondaire au lithium selon la revendication 1.
